# EUROPEAN PATENT APPLICATION

(11) **EP 4 398 637 A1**
(43) Date of publication of application: **10.07.2024**
(21) Application number: 22866476.9
(22) Date of filing: 30.08.2022
(51) Int. Cl.: H04W 40/22, H04W 88/04

(54) **COMMUNICATION METHOD, ELECTRONIC DEVICE AND COMPUTER-READABLE MEDIUM**

(30) Priority: 13.09.2021 CN 202111070224
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); WANG, Yuxin, Shenzhen, Guangdong 518057 (CN); CHEN, Yijian, Shenzhen, Guangdong 518057 (CN)
(74) Representative: Canzler & Bergmeier Patentanwälte Partnerschaft mbB
(86) International application number: PCT/CN2022/115737
(87) International publication number: WO 2023/036010

(57) **Abstract**

Provided in the present disclosure is a communication method for a third network element. The communication method comprises: receiving a downlink control information (DCI) format; and relaying a signal between a first network element and a second network element according to information that is carried in the DCI Format. Further provided in the present disclosure are a communication method for a first network element, and an electronic device and a computer-readable medium.

## Description

### CROSS-REFERENCE TO RELATED APPLICATIONS

The present disclosure claims the priority of Chinese patent application No. 202111070224.6 titled "COMMUNICATION METHOD, ELECTRONIC DEVICE and COMPUTER-READABLE MEDIUM" filed with the CNIPA on September 13, 2021, the entire contents of which are incorporated herein by reference.

### TECHNICAL FIELD

Embodiments of the present disclosure relate to, but are not limited to, the field of communication technology, and in particular, to a communication method, an electronic device, and a computer-readable medium.

### BACKGROUND

When communication is performed between a first network element and a second network element, communication quality between the first network element and the second network element may be deteriorated due to an overlarge distance or an obstacle therebetween. To improve the communication quality between the first network element and the second network element, as an optional implementation, a third network element may be used to relay a signal between the first network element and the second network element.

How to enable the third network element to relay the signal between the first network element and the second network element well under various different scenarios is a current researching direction in the art.

### SUMMARY

Embodiments of the present disclosure provide a communication method, an electronic device, and a computer-readable medium.

As a first aspect of the present disclosure, there is provided a communication method for a third network element including: receiving a downlink control information format (DCI Format); and relaying a signal between a first network element and a second network element according to information carried in the DCI Format.

As a second aspect of the present disclosure, there is provided a communication method, including: generating a control information format (DCI Format) according to a first network element, a second network element and information to be relayed; and sending the DCI Format to a third network element so that the third network element relays a signal between the first network element and the second network element according to information carried in the DCI Format.

As a third aspect of the present disclosure, there is provided an electronic device, including: at least one processor; a memory having at least one program stored thereon which, when executed by the at least one processor, cause the at least one processor to implement the communication method according to the first or second aspect of the present disclosure; and at least one I/O interface connected between the processor and the memory and configured to enable information interaction between the processor and the memory.

As a fourth aspect of the present disclosure, there is provided a computer-readable medium storing a computer program thereon which, when executed by a processor, causes the communication method according to the first or second aspect of the present disclosure to be implemented.

### BRIEF DESCRIPTION OF DRAWINGS

FIG. 1 is a schematic flowchart of an implementation of a communication method according to a first aspect of the present disclosure;
FIG. 2 is a schematic flowchart of another implementation of a communication method according to a first aspect of the present disclosure;
FIG. 3 is a flowchart of an implementation of operation S120;
FIG. 4 is a flowchart of another implementation of operation S120;
FIG. 5 is a schematic flowchart of an implementation of a communication method according to a second aspect of the present disclosure;
FIG. 6 is a schematic diagram of an electronic device according to the present disclosure; and
FIG. 7 is a schematic diagram of a computer-readable medium according to the present disclosure.

### DETAIL DESCRIPTION OF EMBODIMENTS

To improve understanding of the technical solution of the present disclosure for those skilled in the art, the communication method, the electronic device, and the computer-readable medium according to the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

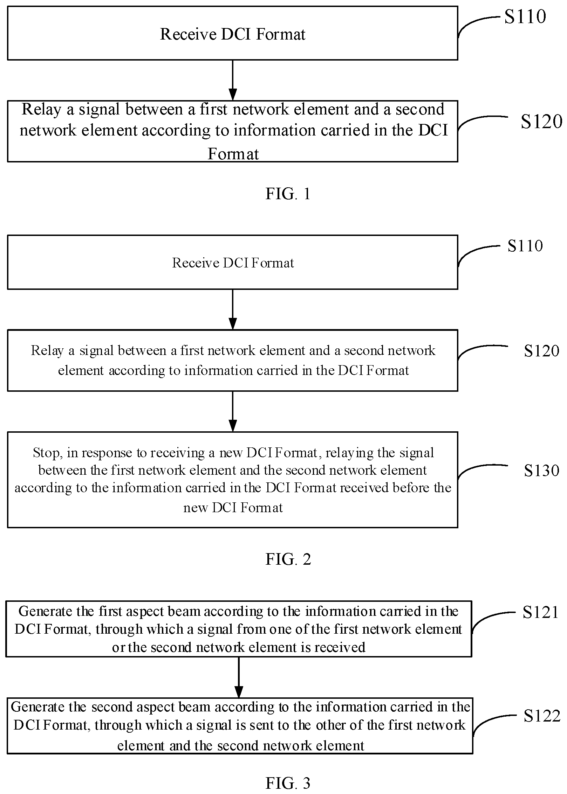

As a first aspect of the present disclosure, there is provided a communication method for a third network element. As shown in FIG. 1, the communication method includes the following operations S110 to S120.

At operation S 110, receiving a downlink control information format (DCI Format).

At operation S120, relaying a signal between a first network element and a second network element according to information carried in the DCI Format.

The third network element is a network element with a relay function, and is configured to relay a signal between a first network element and a second network element to improve the communication quality. For example, the third network element receives a signal sent from the first network element, and sends the received signal to the second network element; or the third network element receives a signal sent from the second network element, and sends the received signal to the first network element.

In the communication method of the present disclosure, the third network element relays the signal between the first network element and the second network element according to the received DCI Format. In other words, the third network element can flexibly relay the signal between the first network element and the second network element through the DCI Format, thereby improving the efficiency of the communication system.

As an optional implementation, the DCI Format is information generated from information to be relayed and position information of a destination network element (one or both of the first network element and the second network element). The position information of the destination network element here may be precise position information of the destination network element, or orientation information of the destination network element. When the third network element schedules resources therein according to the DCI Format to relay the signal between the first network element and the second network element, the destination network element is the first network element or the second network element.

During this signal relaying, the third network element receives the DCI Format satisfying a current service requirement, and in a next signal relaying, the third network element will receive the DCI Format satisfying a next service requirement. Therefore, by the communication method provided in the present disclosure, the third network element can flexibly schedule local resources of the third network element to satisfy different service requirements.

It should be noted that the DCI Format is correlated to the corresponding service requirement, and the DCI Formats received in different time periods may be the same or different. That is to say, the DCI Format is an information format that satisfies a current application scenario, and therefore, the communication method provided in the present disclosure further has the advantage of being adaptive to various different application scenarios.

In service, the second network element may be the same position or different positions. With the communication method provided in the present disclosure, the third network element can determine, according to the DCI Format, a direction of a beam used for relaying the signal between the first network element and the second network element, so that the beam can be aligned with a corresponding destination network element. The destination network elements involved in different time periods may be the same or different.

For example, in a time period T1, a first network element A sends a signal, and the destination network element, i.e., a second network element B, receives the signal; in a time period T2, the first network element A sends a signal, and the destination network element, i.e., a second network element C, receives the signal; and in a third time period T3, the second network element B sends a signal, and the destination network element, i.e., the first network element A, receives the signal.

In the above three cases, the third network element receives DCI Formats different from each other in different time periods.

In the present disclosure, the specific types of the first network element and the second network element are not particularly limited as long as the two network elements can perform communication. As an optional implementation, the first network element may be a base station, while the second network element may be a terminal. Apparently, the communication method of the present disclosure is also applicable to the case where the first network element is a terminal and the second network element is a base station. It is also possible that the first network element is a terminal, and the second network element is another terminal. It is also possible that the first network element is a relay node, and the second network element is a terminal. It is also possible that the first network element is a base station, and the second network element is a relay node. It is also possible that the first network element is a base station, and the second network element is another base station.

The specific type of the third network element is not particularly limited in the present disclosure, and as an optional implementation, the third network element may be any one of a relay or repeater or an intelligent surface, or a terminal with a relay function.

In the present disclosure, the specific form of relaying the signal between the first network element and the second network element according to the information carried in the DCI Format is particular limited.

As an optional implementation, the third network element may receive information (or a signal) from the first network element, and then send the information (or signal) from the first network element to the second network element according to information carried in the DCI Format.

As another optional implementation, the third network element may receive information (or a signal) from the second network element, and then send the information (or signal) from the second network element to the first network element according to information carried in the DCI Format.

In the present disclosure, the information carried in the DCI Format is not particularly limited. As an optional implementation, the information carried in the DCI Format includes a start time for relaying the signal between the first network element and the second network element according to the information carried in the DCI Format.

To schedule resources of the third network element, a start time for sending a signal conforming to the DCI Format can be determined according to the start time carried in the DCI Format.

In the present disclosure, the time to control the third network element to stop relaying the signal between the first network element and the second network element according to the received DCI Format is not particularly limited. As an optional implementation, the third network element may, upon receiving a new DCI Format, stop relaying the signal between the first network element and the second network element according to the information carried in the DCI Format received before the new DCI Format. In other words, as shown in FIG.2, the communication method may include operation S130.

At operation S130, stopping, in response to receiving a new DCI Format, relaying the signal between the first network element and the second network element according to the information carried in the DCI Format received before the new DCI Format.

Apparently, the present disclosure is not limited thereto, and to better control the time for the third network element to relay the signal between the first network element and the second network element, optionally, the DCI Format further carries a duration for relaying the signal between the first network element and the second network element according to the information carried in the DCI Format, and/or an end time for relaying the signal between the first network element and the second network element according to the information carried in the DCI Format.

In other words, the time to control the third network element to stop relaying the signal between the first network element and the second network element according to the received DCI Format may be determined according to a duration of the DCI Format; or the third network element may be controlled to stop relaying the signal between the first network element and the second network element according to the received DCI Format according to an end time carried in the DCI Format.

Apparently, the present disclosure is not limited thereto. Under the condition that the DCI Format received in operation S 110 is not the first DCI Format received by the third network element, in order to shorten the operation process, improve the relay efficiency, and reduce complexity of a signal format of the DCI Format, optionally, the information carried in the DCI Format received in operation S110 may include a reference moment, which is a moment at which the third network element relays a signal between the first network element and the second network. Accordingly, operation S120 may be specifically performed as:
relaying the signal between the first network element and the second network element according to a mode for the third network element relaying the signal between the first network element and the second network element at the reference moment, for example, relaying the signal between the first network element and the second network element according to a spatial distribution mode for the third network element relaying the signal between the first network element and the second network element at the reference moment.

For example, the reference moment may be "the moment at which the signal between the first network element and the second network is relayed last time". In such implementations, the signal between the first network element and the second network element may be relayed in a mode the same as the mode of relaying the signal between the first network element and the second network last time. Apparently, the specific content of the DCI Format this time depends on current service data to be relayed.

In such implementations, the third network element may determine a mode for relaying the signal between the first network element and the second network element by looking up a DCI Format corresponding to the reference moment, thereby reducing system complexity of the third network element.

To shorten the operation process, improve the relay efficiency, and reduce complexity of a signal format of the DCI Format, optionally, as another optional implementation, the information carried in the DCI Format includes information of a reference signal, and operation S120 may be specifically performed as:
relaying the signal between the first network element and the second network element according to a spatial distribution mode of relaying the reference signal.

In the present disclosure, the specific form of the reference signal is not particularly limited, and may be preset according to the service requirement.

Through this implementation, the third network element may determine a mode for relaying the signal between the first network element and the second network element by searching a mode for relaying the reference signal, thereby reducing system complexity of the third network element.

In the present disclosure, how to obtain DCI Format is not particularly limited. For example, the DCI Format may be generated and transmitted by one of the first network element or the second network element, or may be generated and transmitted by another device having a function of generating the DCI Format.

As described above, the first network element may be a base station. Therefore, the first network element may directly generate and transmit the DCI Format, and the third network element may directly receive the DCI Format generated and transmitted by the first network element.

To save resources, optionally, the electronic device generating the DCI Format may carry the DCI Format in downlink information transmitted over a physical downlink control channel (PDCCH).

Accordingly, the operation S110 may specifically include:
receiving a DCI Format carried by the PDCCH.

As described above, the information carried in the DCI Format includes a start time for relaying the signal between the first network element and the second network element according to the information carried in the DCI Format. Accordingly, an FDM symbol at a predetermined position in the received PDCCH (i.e., downlink information) is used as a reference point, and a time point behind the reference point and corresponds to a position spaced from an end of the OFDM symbol at the reference point by a predetermined number of OFDM symbols, is determined as a start time for relaying the signal between the first network element and the second network element according to the information carried in the DCI Format (i.e., operation S120).

In the present disclosure, the specific type of the reference point is not particularly limited, as long as the third network element can send the relayed signal according to the start time corresponding to the reference point. To reduce the system complexity of the third network element, as an optional implementation, the predetermined position is a last OFDM symbol of the PDCCH.

In other words, only after the third network element has decoded the PDCCH, the signal between the first network element and the second network element is relayed according to the signal carried in the DCI Format. In this manner, the third network element may perform operation S120 after preparing the resources to be executed.

In the present disclosure, the "predetermined number" is not particularly limited. As an optional implementation, the predetermined position may be a position spaced from an end of the last OFDM symbol in the downlink information by N OFDM symbols. In the present disclosure, N is a positive integer, and the value of N is not particularly limited. For example, N may be 2 or 3.

As another implementation, the reference point may be a symbol Zref at other positions. The symbol Zref may be a symbol spaced from the end of the last OFDM symbol in the PDCCH by M OFDM symbols. M is a non-negative integer, and the specific value of M is not particularly limited in the present disclosure.

As an optional implementation, the third network element may report a reference time period to an electronic device (e.g., the first network element) generating the DCI Format, and the electronic device generating the DCI Format determines the predetermined position and the predetermined number according to the received reference time period. It should be noted that an interval between the predetermined position and the reference point (i.e., a time interval corresponding to the predetermined number of OFDM symbols) is not less than the reference time period. Accordingly, before operation S110, the communication method may include:
sending information carrying a reference time period to a device generating the DCI Format, so that the device generating the DCI Format determines the predetermined position and the predetermined number according to the reference time period.

In the present disclosure, how to determine the reference time period is not particularly limited. For example, the third network element may determine the reference time period according to a system capability of the third network element, or may determine the reference time period according to a protocol between the first network element and the third network element.

In the case that the length of the reference time period is determined according to the system capability of the third network element, the system capability of the third network element may be divided into multiple levels, depending on which the length of the reference time period is determined. For example, the system capability of the third network element may be divided into three levels, i.e., level 1, level 2 and level 3, flow low to high. That is, a system capability corresponding to level 3 is higher than a system capability corresponding to level 2, and a system capability corresponding to level 2 is higher than a system capability corresponding to level 1. A higher capability level needs less time to prepare execution resources, and corresponding to a shorter reference time period. For example, when the system capability of the third network element is level 1, the reference time period may be a time period corresponding to 5 to 7 OFDM symbols; when the system capability of the third network element is level 2, the reference time period may be a time period corresponding to 3 to 4 OFDM symbols; and when the system capability of the third network element is level 1, the reference time period may be a time period corresponding to 1 to 2 OFDM symbols.

Optionally, a predetermined number of OFDM symbols correspond to a time interval not less than a length of the reference time period, so that the third network element has sufficient time to prepare resources.

For another example, the third network element may determine the reference time period according to a preparation time required for generating a beam after receiving the downlink information.

In the present disclosure, what signal form is adopted by the third network element to relay the signal between the first network element and the second network element is not particularly limited. Optionally, the operation S120 may include:

generating at least one beam according to the information carried in the DCI Format, through which the signal between the first network element and the second network element is relayed.

The third network element may generate the beam according to information carried in the DCI Format.

When the DCI Format carries a start time of each beam; the operation of generating the beam may be specifically performed as: generating a beam at the start time of each beam.

When the DCI Format carries a start time of a first beam, and a time interval information between two adjacent beams, the operation of generating the beam may be specifically performed as:
generating the first beam at the start time of the first beam; and
generating a subsequent beam according to the time interval information carried in the DCI Format.

As described above, the DCI Format further carries a duration for relaying the signal between the first network element and the second network element according to the information carried in the DCI Format, and/or an end time for relaying the signal between the first network element and the second network element according to the information carried in the DCI Format. Specifically, in the implementation of relaying the signal between the first network element and the second network element by a beam, the information carried in the DCI Format further includes a duration of each beam and/or an end time of each beam.

In the present disclosure, the plurality of beams are not particularly limited. As an optional implementation, the plurality of beams includes a first aspect beam and a second aspect beam.

Accordingly, as shown in FIG. 3, the operation S120 may include the following operations S121 to S122.

At operation S121, generating the first aspect beam according to the information carried in the DCI Format, through which a signal from one of the first network element or the second network element is received.

At operation S122, generating the second aspect beam according to the information carried in the DCI Format, through which a signal is sent to the other of the first network element or the second network element.

A specific embodiment will be described below:

The third network element generates two beams, i.e., a first aspect beam L1 and a second aspect beam L2, for relaying signals between the first network element and the second network element, and the information carried in the DCI Format may include:
a beam direction of the first aspect beam toward the first network element;
a start time S 1 of the first aspect beam;
a duration L1 and/or end time of the first aspect beam;
a beam direction of the second aspect beam toward the second network element;
a start time S2 of the second aspect beam, or a time interval between the second aspect beam and the first aspect beam; and
a duration L2 and/or end time of the second aspect beam.

As one implementation, at the start time S1, a relay signal for the first aspect beam is generated to receive a signal from the first network element; and at the start time S2, the first aspect beam is switched to the second aspect beam for the duration L2 to send the signal to the second network element.

As one implementation, at the start time S1, the first aspect beam is generated for the duration L1, and then a relay signal for the second aspect beam is generated for the duration L2.

As one implementation, at the start time S1, the first aspect beam is ended after the relay signal for the first aspect beam lasts for the duration L1, and after the time interval described above, the second aspect beam is generated and lasts for the duration L2.

The above describes the implementation of carrying the start time of the first aspect beam and the start time of the second aspect beam in the DCI Format, but the present disclosure is not limited thereto. For example, the start time of the first aspect beam may be agreed upon by way of a protocol, and then the start time of the second aspect beam may be agreed upon by way of a protocol.

Alternatively, the start time of the first aspect beam may be agreed upon by way of a protocol, and the start time of the second aspect beam may be carried in the DCI Format.

Alternatively, the start time of the first aspect beam may be carried in the DCI Format, and the start time of the second aspect beam may be agreed upon by way of a protocol.

As another implementation of the present disclosure, the information carried in the DCI Format includes information representing at least one spatial distribution mode for relaying the signal between the first network element and the second network element.

That is, the third network element generates signals distributed according to a spatial distribution form carried in the DCI Format, to relay the signal between the first network element and the second network element. Accordingly, operation S 120 may be specifically performed as:
relaying the signal between the first network element and the second network element in the spatial distribution mode.

For example, the spatial distribution mode carried in the DCI Format is a mode toward the second network element, so that the third network element sends a signal to, or receives a signal from, the second network element in a signal spatial distribution mode toward the second network element. For another example, the spatial distribution mode carried in the DCI Format is a mode toward the first network element, so that the third network element sends a signal to, or receives a signal from, the first network element in a signal spatial distribution mode toward the first network element.

In a possible implementation, the DCI Format carries one spatial distribution form. In other words, when operation S 120 is executed, the third network element only generates signals distributed according to that spatial distribution form, to relay a signal between the first network element and the second network element. Accordingly, the start time for relaying the signal between the first network element and the second network element according to the information carried in the DCI Format is a start time of the spatial distribution form; the duration for relaying the signal between the first network element and the second network element according to the information carried in the DCI Format is a duration of the spatial distribution form; and a stop time for relaying the signal between the first network element and the second network element according to the information carried in the DCI Format is a stop time of the spatial distribution form.

In this implementation, operation S130 is specifically performed as: stopping, in response to receiving a new DCI Format, relaying the signal between the first network element and the second network element by signals distributed according to the spatial distribution form.

Optionally, the information carried in the DCI Format includes information representing a plurality of spatial distribution modes for relaying the signal between the first network element and the second network element, so that the third network element generates signals distributed according to different spatial distribution forms at different time periods. The start time for relaying the signal between the first network element and the second network element according to the information carried in the DCI Format includes a start time for relaying the signal between the first network element and the second network element according to each spatial distribution form; and/or the start time for relaying the signal between the first network element and the second network element according to the information carried in the DCI Format includes a start time for relaying the signal between the first network element and the second network element according to a first spatial distribution form, and the DCI Format further carries time interval information between two spatial distribution forms.

Optionally, the information carried in the DCI Format further includes a duration of each spatial distribution form and/or an end time of each spatial distribution form.

Optionally, the at least one spatial distribution mode includes a first spatial distribution mode and a second spatial distribution mode, the information carried in the DCI Format includes a start time of the first spatial distribution mode, and a start time of the second spatial distribution mode.

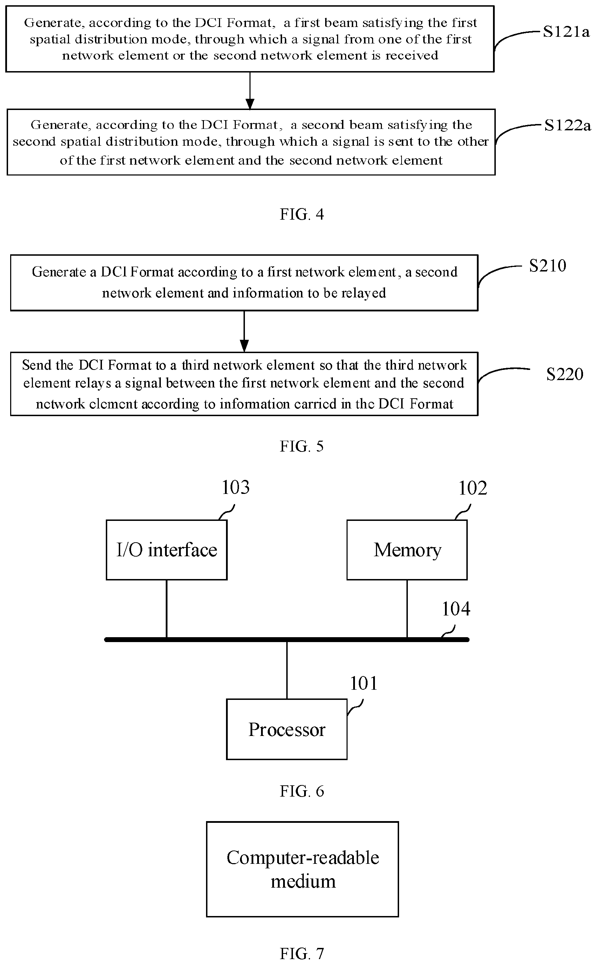

Accordingly, as shown in FIG. 4, the operation S120 includes the following operations S121a to S122a.

At operation S121a, generating, according to the DCI Format, a first beam satisfying the first spatial distribution mode, through which a signal from one of the first network element or the second network element is received.

At operation S122a, generating, according to the DCI Format, a second beam satisfying the second spatial distribution mode, through which a signal is sent to the other of the first network element or the second network element.

In the present disclosure, the start time of the first beam and the start time of the second beam are not limited. For example, the start time of the first beam and the start time of the second beam may be carried in the DCI Format.

Apparently, the start time of the first beam and the start time of the second beam may be agreed upon by way of a protocol.

Alternatively, the start time of the first beam may be carried in the DCI Format, and the start time of the second beam may be agreed upon by way of a protocol.

Alternatively, the start time of the first beam may be agreed upon by way of a protocol, and the start time of the second beam may be carried in the DCI Format.

For convenience of implementation, optionally, the information representing the spatial distribution mode includes identification information of a spatial filter, so that a relay signal having a corresponding spatial distribution form is generated with the spatial filter.

As one implementation, feature information of the relay signal includes identification information of two spatial filters (a first spatial filter and a second spatial filter, respectively). Accordingly, the information carried in the DCI Format may include:
a start time of using the first spatial filter;
a duration and/or end time of using the first spatial filter;
a start time of using the second spatial filter, and/or a time interval between using the first spatial filter and using the second spatial filter; and
a duration and/or end time of using the second spatial filter.

As a second aspect of the present disclosure, there is provided a communication method which, as shown in FIG. 5, includes the following operations S210 to S220.

At operation S210, generating a downlink control information format (DCI Format) according to a first network element, a second network element and information to be relayed.

At operation S220, sending the DCI Format to a third network element so that the third network element relays a signal between the first network element and the second network element according to information carried in the DCI Format.

The communication method according to the first aspect of the present disclosure may be used in conjunction with the communication method according to the second aspect of the present disclosure. In the communication method according to the second aspect of the present disclosure, an electronic device executing the communication method sends a DCI Format corresponding to information of a first network element, information of a second network element, and information to be relayed to a third network element. In the communication method according to the first aspect of the present disclosure, after receiving the DCI Format, the third network element may relay a signal between a first network element and a second network element according to the information carried in the DCI Format, thereby finally implementing communication between the first network element and the second network element.

In the present disclosure, the electronic device for executing the communication method according to the second aspect of the present disclosure is not particularly limited. Optionally, the electronic device may be the first network element.

As described above, the DCI Format carries a start time for relaying the signal between the first network element and the second network element by the third network element according to the information carried in the DCI Format, and at least one of:
a duration for relaying the signal between the first network element and the second network element the third network element according to the information carried in the DCI Format; or
an end time for relaying the signal between the first network element and the second network element the third network element according to the information carried in the DCI Format.

Optionally, the information carried in the DCI Format further includes a reference moment, so that the third network element relays the signal between the first network element and the second network element according to the information carried in the DCI Format corresponding to the reference moment. In this implementation, the DCI Format does not need to be described in a complex manner, and the information format of the DCI Format sent to the third network element is simplified, and thus the operation efficiency of the first network element is improved.

Optionally, the information carried in the DCI Format includes information of a reference signal, so that the third network element may relay the signal between the first network element and the second network element according to a form of the reference signal.

In the present disclosure, the specific form of the reference signal is not particularly limited, and may be preset according to the service requirement.

Through this implementation, the third network element can determine a mode for relaying the signal between the first network element and the second network element by searching a mode for the reference signal, thereby reducing system complexity of the third network element. In addition, the first network element does not need to describe the DCI Format in a complex manner, so that the information format of the DCI Format sent to the third network element is simplified, and the operation efficiency of the first network element is improved.

As described above, the DCI Format is carried in downlink information on a PDCCH.

To facilitate the third network element to determine the start time for relaying the signal between the first network element and the second network element according to the information carried in the DCI Format, optionally, before operation S210, the communication method may further include:
determining, in response to information of a reference time period carried and sent by a third network element, a start time for relaying the signal between the first network element and the second network element by the third network element according to the information carried in the DCI Format, where an orthogonal frequency division multiplexing (OFDM) symbol at a predetermined position is used as a reference point, and a time point behind the reference point and corresponds to a position spaced from an end of the OFDM symbol at the reference point by a predetermined number of OFDM symbols, is used as a start time for relaying the signal between the first network element and the second network element according to the information carried in the DCI Format, and the predetermined number of OFDM symbols correspond to a time interval not less than a length of the reference time period.

The DCI Format carries information representing a start time for relaying the signal between the first network element and the second network element by the third network element according to the information carried in the DCI Format.

Optionally, the DCI Format further carries information of at least one beam, so that the third network element generates a beam for relaying the signal between the first network element and the second network element according to the information of the at least one beam carried in the DCI Format.

Optionally, the DCI Format carries information of a plurality of beams, and the start time for relaying the signal between the first network element and the second network element by the third network element according to the information carried in the DCI Format includes a start time of each beam; and/or the start time for relaying the signal between the first network element and the second network element by the third network element according to the information carried in the DCI Format includes a start time of a first beam, and the DCI Format further carries time interval information between two adjacent beams.

In the present disclosure, the specific number of beams may be determined according to the information to be relayed.

Optionally, the plurality of beams includes a first aspect beam and a second aspect beam, so that the third network element generates the first aspect beam according to the information carried in the DCI Format, through which a signal from one of the first network element or the second network element is received; and so that the third network element generates the second aspect beam according to the information carried in the DCI Format, through which a signal is sent to the other of the first network element or the second network element.

Optionally, the DCI Format further carries at least one spatial distribution form, so that the third network element can generate a relay signal satisfying the spatial distribution form, and relay the signal between the first network element and the second network element by the relay signal.

Optionally, the DCI Format carries a plurality of spatial distribution forms, so that the relayed signal is distributed in different spatial distribution forms at different time periods. The start time for relaying the signal between the first network element and the second network element by the third network element according to the information carried in the DCI Format includes a start time for relaying the signal between the first network element and the second network element according to each spatial distribution form; and/or the start time for relaying the signal between the first network element and the second network element by the third network element according to the information carried in the DCI Format includes a start time for relaying the signal between the first network element and the second network element according to a first spatial distribution form, and the DCI Format further carries time interval information between two spatial distribution forms.

Optionally, the information carried in the DCI Format further includes a duration of each spatial distribution form and/or an end time of each spatial distribution form.

Optionally, the at least one spatial distribution mode includes a first spatial distribution mode and a second spatial distribution mode, the information carried in the DCI Format includes a start time of the first spatial distribution mode, and a start time of the second spatial distribution mode, so that:
the third network element generates, according to the DCI Format, a first beam satisfying the first spatial distribution mode, through which a signal from one of the first network element or the second network element is received; and
the third network element generates, according to the DCI Format, a second beam satisfying the second spatial distribution mode, through which a signal is sent to the other of the first network element or the second network element.

Optionally, feature information of the relay signal includes identification information of a spatial filter to be used, so that a relay signal having a corresponding spatial distribution form is generated with the spatial filter.

Similarly, the specific number of spatial distribution forms may be determined according to the information to be relayed. When the information to be relayed can be carried by signals in the same spatial distribution form, the feature information of the relay signal includes information representing one spatial distribution form. When the information to be relayed is carried by a plurality of signals of different spatial distribution forms, the feature information of the relay signal includes information representing a plurality of spatial distribution forms.

The DCI Format involved in the communication method according to the second aspect of the present disclosure is the same as the DCI Format involved in the communication method according to the first aspect of the present disclosure.

As a third aspect of the present disclosure, there is provided an electronic device which, as shown in FIG. 6, includes:
at least one processor 101;
a memory 102 having at least one program stored thereon which, when executed by the at least one processor, cause the at least one processor 101 to implement the communication method according to the first or second aspect of the present disclosure; and
at least one I/O interface 103 connected between the processor and the memory and configured to enable information interaction between the processor and the memory.

The processor 101 is a device with a data processing capability, including but not limited to, a central processing unit (CPU), or the like; The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a bus or the like.

In some embodiments, the processor 101, the memory 102, and the I/O interface 103 are interconnected via a bus 104, and further connected to other components of a computing device.

When a network element performs the communication method according to the first aspect of the present disclosure, the network element is used as the third network element; and when a network element performs the communication method according to the second aspect of the present disclosure, the network element is used as the first network element.

As a fourth aspect of the present disclosure, as shown in FIG. 7, there is provided a computer-readable medium storing a computer program thereon which, when executed by a processor, causes the communication method according to the first or second aspect of the present disclosure to be implemented.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disc storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A communication method, applied for a third network element, comprising:
receiving a downlink control information format, DCI Format; and
relaying a signal between a first network element and a second network element according to information carried in the DCI Format.

2. The method according to claim 1, wherein the information carried in the DCI Format comprises a start time for relaying the signal between the first network element and the second network element according to the information carried in the DCI Format.

3. The method according to claim 2, wherein the method further comprises:
stopping, in response to receiving a new DCI Format, relaying the signal between the first network element and the second network element according to the information carried in the DCI Format received before the new DCI Format.

4. The method according to claim 2, wherein the DCI Format further carries a duration for relaying the signal between the first network element and the second network element according to the information carried in the DCI Format, and/or an end time for relaying the signal between the first network element and the second network element according to the information carried in the DCI Format.

5. The method according to claim 1, wherein the information carried in the DCI Format further comprises a reference moment, and relaying the signal between the first network element and the second network element according to the information carried in the DCI Format comprises:
relaying the signal between the first network element and the second network element according to a spatial distribution mode of relaying the signal between the first network element and the second network element at the reference moment.

6. The method according to claim 1, wherein the information carried in the DCI Format comprises information of a reference signal, and relaying the signal between the first network element and the second network element information carried in the DCI Format comprises:
relaying the signal between the first network element and the second network element according to a spatial distribution mode of relaying the reference signal.

7. The method according to any one of claims 1 to 6, wherein receiving the DCI Format comprises:
receiving a DCI Format carried by a physical downlink control channel, PDCCH.

8. The method according to claim 7, wherein an orthogonal frequency division multiplexing, OFDM, symbol at a predetermined position is used as a reference point, and a time point behind the reference point and corresponds to a position spaced from an end of the OFDM symbol at the reference point by a predetermined number of OFDM symbols, is determined as a start time for relaying the signal between the first network element and the second network element according to the information carried in the DCI Format.

9. The method according to claim 8, wherein the OFDM symbol at the predetermined position is a last OFDM symbol of the PDCCH.

10. The method according to claim 8, wherein before receiving the DCI Format, the method further comprises:
sending information carrying a reference time period to a device generating the DCI Format, so that the device generating the DCI Format determines the predetermined position and the predetermined number according to the reference time period.

11. The method according to claim 10, wherein the predetermined number of OFDM symbols correspond to a time interval not less than a length of the reference time period.

12. The method according to claim 1, wherein relaying the signal between the first network element and the second network element according to the information carried in the DCI Format comprises:
generating at least one beam according to the information carried in the DCI Format, through which the signal between the first network element and the second network element is relayed.

13. The method according to claim 12, wherein the information carried in the DCI Format comprises start times of a plurality of beams for relaying the signal between the first network element and the second network element according to the information carried in the DCI Format; and
generating at least one beam according to the information carried in the DCI Format comprises: generating a beam at the start time of each beam.

14. The method according to claim 12, wherein the information carried in the DCI Format comprises a start time of a first beam for relaying the signal between the first network element and the second network element according to the information carried in the DCI Format, and the DCI Format further carries time interval information between two adjacent beams; and
generating at least one beam according to the information carried in the DCI Format comprises: generating the first beam at the start time of the first beam; and generating a subsequent beam according to the time interval information carried in the DCI Format.

15. The method according to claim 13, wherein the information carried in the DCI Format further comprises a duration of each beam and/or an end time of each beam.

16. The method according to any one of claims 13 to 15, wherein the plurality of beams comprises a first aspect beam and a second aspect beam,
relaying the signal between the first network element and the second network element according to the information carried in the DCI Format comprises: generating the first aspect beam according to the information carried in the DCI Format, through which a signal from one of the first network element or the second network element is received; and generating a second aspect beam according to the information carried in the DCI Format, through which a signal is sent to the other of the first network element or the second network element.

17. The method according to claim 1, wherein the information carried in the DCI Format comprises information representing at least one spatial distribution mode for relaying the signal between the first network element and the second network element; and
relaying the signal between the first network element and the second network element according to the information carried in the DCI Format comprises: relaying the signal between the first network element and the second network element in the spatial distribution mode.

18. The method according to claim 17, wherein the information representing the spatial distribution mode comprises identification information of a spatial filter, so that a relay signal having a corresponding spatial distribution mode is generated with the spatial filter.

19. The method according to claim 17, wherein
the information carried in the DCI Format comprises information representing a plurality of spatial distribution modes for relaying the signal between the first network element and the second network element, so that the signal is relayed according to different spatial distribution forms at different time periods,
the start time carried in the DCI Format comprises a start time for relaying the signal between the first network element and the second network element according to each spatial distribution form; and/or the start time carried in the DCI Format comprises a start time for relaying the signal between the first network element and the second network element according to a first spatial distribution form, and the DCI Format further carries time interval information between two spatial distribution forms.

20. The method according to claim 17, wherein the information carried in the DCI Format further comprises a duration of each spatial distribution form and/or an end time of each spatial distribution form.

21. The method according to any one of claims 17 to 20, wherein the at least one spatial distribution mode comprises a first spatial distribution mode and a second spatial distribution mode, the information carried in the DCI Format comprises a start time of the first spatial distribution mode, and a start time of the second spatial distribution mode, and
relaying the signal between the first network element and the second network element according to the information carried in the DCI Format comprises: receiving a signal from one of the first network element or the second network element in the first spatial distribution mode; and transmitting a signal to the other of the first network element or the second network element in the second spatial distribution mode.

22. A communication method, comprising:
generating a control information format, DCI Format, according to a first network element, a second network element and information to be relayed; and
sending the DCI Format to a third network element so that the third network element relays a signal between the first network element and the second network element according to information carried in the DCI Format.

23. The method according to claim 22, wherein the DCI Format carries a start time for relaying the signal between the first network element and the second network element by the third network element according to the information carried in the DCI Format, and at least one of:
a duration for relaying the signal between the first network element and the second network element the third network element according to the information carried in the DCI Format; or
an end time for relaying the signal between the first network element and the second network element the third network element according to the information carried in the DCI Format.

24. The method according to claim 23, wherein the information carried in the DCI Format further comprises a reference moment, so that the third network element relays the signal between the first network element and the second network element according to a spatial distribution mode of relaying the signal between the first network element and the second network element at the reference moment.

25. The method according to claim 23, wherein the information carried in the DCI Format comprises information of a reference signal, so that the third network element relays the signal between the first network element and the second network element according to a spatial distribution mode of relaying the reference signal.

26. The method according to any one of claims 22 to 25, wherein the DCI Format is carried by a physical downlink control channel, PDCCH.

27. The method according to claim 26, wherein the method further comprises:
determining, in response to information of a reference time period carried and sent by a third network element, a start time for relaying the signal between the first network element and the second network element by the third network element according to the information carried in the DCI Format, wherein an orthogonal frequency division multiplexing, OFDM, symbol at a predetermined position is used as a reference point, and a time point behind the reference point and corresponds to a position spaced from an end of the OFDM symbol at the reference point by a predetermined number of OFDM symbols, is used as a start time for relaying the signal between the first network element and the second network element according to the information carried in the DCI Format, and the predetermined number of OFDM symbols correspond to a time interval not less than a length of the reference time period.

28. The method according to claim 26, wherein the DCI Format further carries information of at least one beam, so that the third network element generates a beam for relaying the signal between the first network element and the second network element according to the information of the at least one beam carried in the DCI Format.

29. The method according to claim 28, wherein the DCI Format carries information of a plurality of beams, and
the start time for relaying the signal between the first network element and the second network element by the third network element according to the information carried in the DCI Format comprises a start time of each beam; and/or the start time for relaying the signal between the first network element and the second network element by the third network element according to the information carried in the DCI Format comprises a start time of a first beam, and the DCI Format further carries time interval information between two adjacent beams.

30. The method according to claim 29, wherein the plurality of beams comprises a first aspect beam and a second aspect beam, so that :
the third network element generates the first aspect beam according to the information carried in the DCI Format, through which a signal from one of the first network element or the second network element is received; and
the third network element generates the second aspect beam according to the information carried in the DCI Format, through which a signal is sent to the other of the first network element or the second network element.

31. The method according to claim 26, wherein the DCI Format further carries at least one spatial distribution form, so that the third network element relays the signal between the first network element and the second network element in the spatial distribution form.

32. The method according to claim 31, wherein the DCI Format carries a plurality of spatial distribution forms, so that the third network element relays the signal between the first network element and the second network element in corresponding spatial distribution forms at different time periods,
the start time for relaying the signal between the first network element and the second network element by the third network element carried in the DCI Format comprises a start time for relaying the signal between the first network element and the second network element according to each spatial distribution form; and/or the start time for relaying the signal between the first network element and the second network element by the third network element carried in the DCI Format comprises a start time for relaying the signal between the first network element and the second network element according to a first spatial distribution form, and the DCI Format further carries time interval information between two spatial distribution forms.

33. The method according to claim 32, wherein the information carried in the DCI Format further comprises a duration of each spatial distribution form and/or an end time of each spatial distribution form.

34. The method according to claim 33, wherein the at least one spatial distribution mode comprises a first spatial distribution mode and a second spatial distribution mode, the information carried in the DCI Format comprises a start time of the first spatial distribution mode, and a start time of the second spatial distribution mode, so that :
the third network element receives a signal from one of the first network element or the second network element in the first spatial distribution mode; and
the third network element transmits a signal to the other of the first network element or the second network element in the second spatial distribution mode.

35. The method according to claim 32, wherein the information carried in the DCI Format comprises identification information of a spatial filter to be used, so that a relay signal having a corresponding spatial distribution mode is generated with the spatial filter.

36. An electronic device, comprising:
at least one processor;
a memory having at least one program stored thereon which, when executed by the at least one processor, causes the at least one processor to implement the communication method according to any one of claims 1 to 35; and
at least one I/O interface connected between the processor and the memory and configured to enable information interaction between the processor and the memory.

37. A computer-readable medium storing a computer program thereon which, when executed by a processor, implements the communication method according to any one of claims 1 to 35.
